# FASCICULE DE BREVET EUROPEEN

(11) **EP 3 554 853 B1**
(45) Date de publication et mention de la délivrance du brevet: **21.10.2020**
(21) Numéro de dépôt: 17822375.6
(22) Date de dépôt: 07.12.2017
(51) Int. Cl.: B60C 11/00, B60C 11/03

(54) **PNEUMATIQUE AVEC UNE BANDE DE ROULEMENT COMPORTANT DES ÉLÉMENTS DE RENFORCEMENT**
REIFEN MIT EINER LAUFFLÄCHE MIT VERSTÄRKUNGSELEMENTEN
TYRE COMPRISING A TREAD CONTAINING REINFORCING ELEMENTS

(30) Priorité: 13.12.2016 FR 1662382
(43) Date de publication de la demande: 23.10.2019
(73) Titulaire: Compagnie Générale des Etablissements Michelin, 63000 Clermont-Ferrand (FR)
(72) Inventeur: PALLOT, Patrick, 63040 Clermont-Ferrand Cedex 9 (FR); PERRIN, Frédéric, 63040 Clermont-Ferrand Cedex 9 (FR)
(74) Mandataire: Bauvir, Jacques
(86) Numéro de dépôt international: PCT/FR2017/053425
(87) Numéro de publication internationale: WO 2018/109324

(56) Documents cités:
- WO-A1-2014/090845
- WO-A1-2016/174100

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

### État de la technique

De manière connue, la bande de roulement d'un pneumatique est pourvue d'une sculpture comprenant notamment des blocs de sculpture délimités par diverses rainures principales, longitudinales ou circonférentielles, axiales ou encore obliques, les blocs élémentaires pouvant en outre comporter diverses incisions ou lamelles plus fines. Les rainures constituent des canaux destinés à évacuer l'eau lors d'un roulage sur sol mouillé ; les parois de ces rainures définissent également les bords des blocs de sculptures ; en fonction de l'orientation des forces auxquelles est soumis un pneumatique en roulage, on parle de bord d'attaque d'un bloc de sculpture lorsque la force est orientée vers le centre du bloc, le bord de fuite d'un bloc de sculpture étant le bord opposé.

Pour améliorer l'adhérence d'un pneumatique, et plus particulièrement pour l'adhérence sur sol sec et sur sol humide, il est bien connu de diminuer la rigidité ou la dureté du mélange caoutchouteux constituant de la bande de roulement. Cette diminution de rigidité de la bande de roulement permet à celle-ci de mieux épouser la surface rugueuse du sol de roulage et ainsi la surface réelle de contact avec le sol de roulage est augmentée et la performance d'adhérence améliorée par rapport à une bande de roulement dont le mélange caoutchouteux est plus rigide.

Cependant, l'utilisation d'un mélange caoutchouteux de bande de roulement moins rigide favorise le cisaillement des blocs de sculpture lorsque le pneumatique doit s'opposer à une force orientée axialement, ce qui provoque le basculement des blocs de sculpture ; cela génère de fortes surpressions sur les bords d'attaque des blocs de sculpture ; ces fortes surpressions, à leur tour, génèrent des échauffements très importants.

Ces surpressions et ces échauffements peuvent contribuer à un endommagement très rapide de la bande de roulement du pneumatique et à une exploitation non optimale du potentiel d'adhérence du mélange de la bande de roulement.

Le document EP0869016 A2 divulgue un pneumatique avec une bande de roulement comportant deux mélanges caoutchouteux superposés, dans lequel les mélanges intérieur et extérieur ont des caractéristiques différentes, pour conserver une bonne adhérence du pneumatique après une usure partielle de la bande de roulement et l'apparition en surface de ce mélange intérieur. Cependant, on constate une augmentation significative de la résistance au roulement d'un tel pneumatique par rapport à un pneumatique n'utilisant dans la bande de roulement que le mélange de rigidité faible, toutes autres choses égales par ailleurs.

Pour améliorer la performance d'adhérence des pneumatiques en stabilisant les blocs de sculpture, le document EP 2 708 382 A1 propose un pneumatique dont la bande de roulement comprend un renforcement circonférentiel constitué d'un mélange caoutchouteux de rigidité supérieure à la rigidité du mélange du reste de la bande de roulement.

Ce pneumatique est tel que le renforcement circonférentiel comporte un élément de renforcement placé sous chaque rainure circonférentielle et s'étendant radialement de la surface radialement intérieure de la bande de roulement jusqu'à former la totalité du fond de la rainure.

Le renforcement des rainures circonférentielles ainsi réalisé permet d'augmenter la poussée de dérive du pneumatique mais la présence d'un mélange rigide en fond de rainure entraîne une difficulté de moulage des témoins d'usure. On constate aussi une augmentation sensible de la résistance au roulement liée notamment à la limitation des mises à plat de la bande de roulement, dans la direction axiale et dans la direction longitudinale. On constate aussi une perte d'adhérence transversale due à la présence de matériau rigide sur les arêtes d'attaques des pains en usage transversal.

Les documents JP2014/11392 A,US2015/107735 et WO2014/090845 présentent aussi des pneumatiques avec des bandes de roulement comportant deux mélanges coutchouteux distincts.

Des pneumatiques comportant des renforcements circonférentiels sont également décrits dans WO2016/174100.

Aucun de ces enseignements ne permet d'utiliser, pour la bande de roulement, des mélanges de caoutchouc à forte adhérence sans aboutir à une usure rapide lorsque le pneumatique est fortement sollicité.

### Description brève de l'invention

L'invention a pour objet un pneumatique ayant un côté extérieur et un côté intérieur, comportant une armature de sommet et une bande de roulement radialement extérieure comme défini dans la revendication 1.

Le ou les éléments de renforcement circonférentiel ainsi disposé(s) permettent de compenser la plus faible contribution à la rigidité de cisaillement et donc à la rigidité de dérive du pneumatique provenant du mélange de caoutchouc utilisé pour le reste de la bande de roulement ; Cela permet donc de garder une bonne capacité de guidage du pneumatique même en choisissant comme mélange de bande de roulement un mélange de type mou, à forte adhérence. Contrairement au brevet EP 2 708 382 A1, le fait d'avoir écarté le renfort de l'arête d'attaque du pain en usage transversal permet de ne pas dégrader l'adhérence transversale tout en bénéficiant d'un renforcement en cisaillement axial permettant une amélioration de la rigidité de dérive du pneu et donc de la tenue de route du véhicule. La présence d'un élément de renforcement pour une seule nervure de sculpture permet déjà d'obtenir une amélioration sensible des performances de tenue de route et d'adhérence axiale des pneumatiques d'un véhicule.

L'élément de renforcement circonférentiel peut être directement posé sur l'armature du sommet du pneumatique ou posé sur une sous-couche ou sur une épaisseur de 1mm à 2 mm du matériau principal constituant la bande de roulement.

Il est aussi à noter que l'invention assure une excellente rigidification en utilisant un volume de gomme de haute rigidité relativement faible, de l'ordre de 5% à 10% du volume total de gomme dans la bande de roulement, ce qui entraîne un important avantage en adhérence, en usure, en résistance au roulement du pneumatique relativement aux pneumatiques divulgués par le document EP 2 708 382 A1 cité.

De préférence, le renforcement circonférentiel comporte deux éléments de renforcement placés respectivement dans les blocs de sculpture adjacents, et de préférence dans tous les blocs. Cela renforce l'effet favorable en termes d'adhérence axiale et la poussée de dérive du pneumatique sans générer de perte d'adhérence transversale.

Selon un exemple de réalisation avantageux, les éléments de renforcement circonférentiels sont disposés de façon asymétrique relativement au plan équatorial EP du pneumatique.

Selon un exemple de réalisation particulier, la bande de roulement ayant une rainure circonférentielle traversée par le plan équatorial, un élément de renforcement circonférentiel est disposés axialement contre la face interne de la rainure circonférentielle traversée par le plan équatorial EP. Cet élément n'est pas en contact avec l'arête d'attaque du pain lors d'un usage transversal. L'élément de renforcement circonférentiel s'étend radialement de la surface radialement extérieure de l'armature de sommet vers la surface de la bande de roulement avec une largeur axiale qui diminue progressivement en se déplaçant radialement vers l'extérieur, ledit élément de renforcement circonférentiel s'étend radialement au maximum sur une hauteur correspondant à 75% de l'épaisseur de la bande de roulement. La partie de l'élément de renforcement la plus extérieure au pneumatique n'entre donc jamais en contact avec la surface externe du pneumatique. (surface en contact avec la route)

La forme de l'élément de renforcement circonférentiel est de section effilée radialement vers l'extérieur. Cela renforce son efficacité en tant que point d'appui. Les parois de cet élément de renforcement circonférentiel peuvent être concaves, convexes ou en escalier.

De préférence, l'angle α que forment les deux parois latérales du ou des éléments de renforcement circonférentiels est compris entre 35 et 45 degrés. En dessous de 35 degrés, l'efficacité du point d'appui est réduite et au-delà de 45 degrés, le volume de l'élément de renforcement circonférentiel devient trop important.

Le mélange caoutchouteux constitutif du renforcement circonférentiel a un module dynamique de cisaillement G* mesuré à 60°C à 10 Hz et sous une contrainte de cisaillement alterné de 0,7 MPa 2 fois plus rigide que le matériau caoutchouteux de la bande de roulement majoritairement en contact avec le sol.

Très avantageusement, le mélange caoutchouteux de bande de roulement a un module dynamique de cisaillement G* mesuré à 60°C à 10 Hz et sous une contrainte de cisaillement alterné de 0,7 MPa inférieur ou égal à 1,3 MPa et de préférence inférieur à 1,1 MPa. La présence du renforcement circonférentiel permet d'utiliser pleinement les capacités d'adhérence d'un tel mélange de bande de roulement de très faible rigidité. Cela est particulièrement utile dans le cas d'un pneumatique pour véhicule de tourisme.

Selon un autre mode de réalisation avantageux, la bande de roulement comporte deux mélanges distincts disposés axialement l'un au-dessus de l'autre. Le mélange disposé radialement intérieurement est usuellement appelé « sous-couche ». Cette sous-couche peut avoir des propriétés hystérétiques plus favorables que le mélange en contact avec la chaussée ce qui améliore le bilan global de résistance au roulement du pneumatique. Alternativement, la sous-couche peut aussi être plus rigide que le mélange caoutchouteux de la bande de roulement pour rigidifier celle-ci. L'élément de renforcement peut alors s'appuyer sur la surface externe de cette sous-couche, tout en gardant l'avantage, en termes de fonctionnement du pneumatique, de s'appuyer directement ou quasi directement sur l'armature du sommet du pneumatique

L'invention concerne plus particulièrement les pneumatiques destinés à équiper des véhicules à moteur de type tourisme, SUV (« *Sports Utility Vehicles* »), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### Description des Figures

Les objets de l'invention sont maintenant décrits à l'aide du dessin annexé dans lequel :
- la figure 1 représente de manière très schématique (sans respect d'une échelle spécifique), une coupe méridienne d'un pneumatique conforme à un mode de réalisation de l'invention ;
- les figures 2 à 8 présentent en coupe méridienne des pneumatiques conformes à différents modes de réalisation de l'invention ;
- la figure 9 montre, en en coupe méridienne, des variantes de réalisation d'un élément de renforcement circonférentiel selon l'invention.

### Description détaillée de l'invention

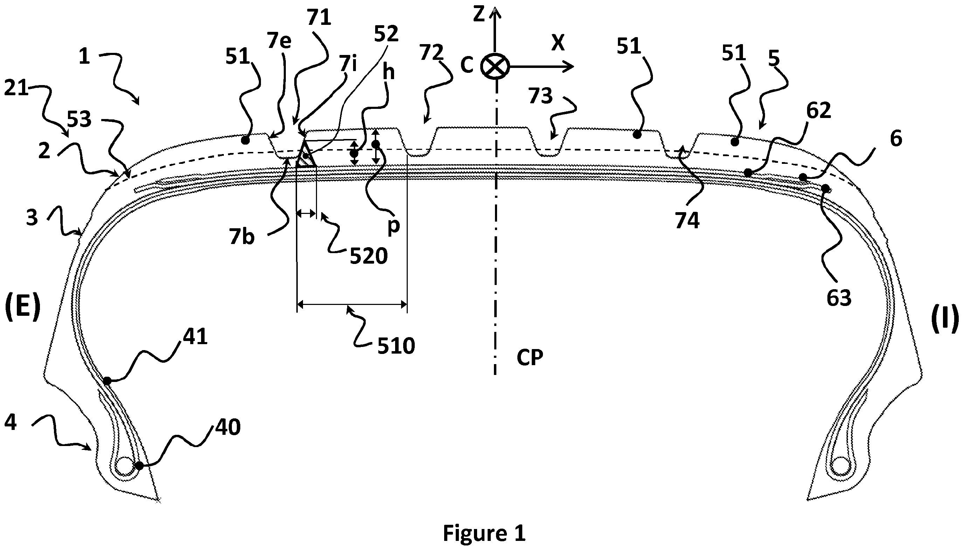

On voit à la figure 1 un pneumatique 1 comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 montre un plan équatorial EP, plan perpendiculaire à l'axe de rotation du pneumatique, situé à mi-distance des deux bourrelets 4 (montés sur jante) et passant par le milieu de l'armature de ceinture ; la figure 1 indique aussi, par des flèches disposées juste au-dessus de la bande de roulement 5, sur le plan équatorial EP, les directions axiale X, circonférentielle C et radiale Z.

Chaque bourrelet comporte une tringle 40. Une nappe de carcasse 41 est enroulée autour de chaque tringle 40. La nappe de carcasse 41 est radiale et est, de manière connue en soi, constituée par des câbles ; dans ce cas de mise en œuvre, il s'agit de câbles textiles ; ces câbles sont disposés sensiblement parallèlement les uns aux autres et s'étendant d'un bourrelet à l'autre de façon telle qu'ils forment un angle compris entre 80° et 90° avec le plan équatorial EP.

La bande de roulement 5 comprend une pluralité de blocs de sculpture 51. Deux blocs de sculpture 51 axialement adjacents sont séparés par une rainure circonférentielle 71, 72, 73, 74 s'étendant au moins en partie circonférentiellement ; chacune des rainures circonférentielles 71,72, 73, 74 est délimitée radialement vers l'intérieur par un fond de rainure circonférentielle et des parois latérales de rainure circonférentielle.

Le sommet 2 comporte une armature de sommet 6 comportant deux nappes de ceinture 62, 63 ; le sommet 2 comporte aussi une nappe de carcasse 41. De façon très classique, les nappes de ceinture 62, 63 sont formés par des câbles métalliques arrangés parallèlement entre eux. De façon bien connue, les éléments de renforcement que forment les câbles de la nappe de carcasse 41 et les câbles des nappes de ceinture 62, 63 sont orientés selon au moins trois directions différentes de façon à former une triangulation.

L'armature de sommet 6 pourrait aussi comporter une nappe de frettage constituée de renforts de frettage formé par des fibres organiques ou polyamide aromatique, formant, avec la direction circonférentielle un angle au plus égal à 5°. L'armature de sommet 6 pourrait aussi comporter d'autres renforts, orientés d'un angle plus proche de 90° ; la constitution de l'armature de sommet ne fait pas partie de l'invention et dans le présent mémoire, lorsque l'on fait référence à la surface radialement extérieure de l'armature de ceinture, on vise le niveau radialement le plus extérieur de la couche de fils ou câbles de renforcement radialement la plus à l'extérieur, y compris la fine couche de mélange de calandrage des fils ou câbles de renforcement s'il y a une telle couche.

L'un des blocs de sculpture 51 comporte aussi un élément de renforcement circonférentiel 52. Cet élément de renforcement circonférentiel 52 est constitué d'un mélange caoutchouteux de rigidité au moins deux fois supérieure à la rigidité du mélange caoutchouteux du reste des blocs de la bande de roulement ; le lecteur se reportera aux paragraphes spécifiques ci-dessous pour des informations complètes sur les compositions de mélange caoutchouteux.

L'élément de renforcement circonférentiel 52 s'étend radialement de la surface radialement extérieure de ladite armature de sommet 6 vers la surface de ladite bande de roulement avec une largeur axiale qui diminue progressivement en se déplaçant radialement vers l'extérieur et au maximum sur une hauteur « h » correspondant à 75% de l'épaisseur « p » de la bande de roulement. L'épaisseur « p » de la bande de roulement est mesurée radialement entre l'extrémité radialement extérieure de l'armature de sommet 6 et la surface de contact avec le sol de la bande de roulement 5.

L'élément de renforcement circonférentiel 52 est de largeur axiale ayant une valeur maximale 520, au niveau de la jonction avec l'armature de sommet 6, inférieure à 30% de la largeur axiale 510 dudit bloc, mesurée où les parois latérales de rainure circonférentielle rencontrent le fond de rainure circonférentielle. On consultera en particulier la figure 1.

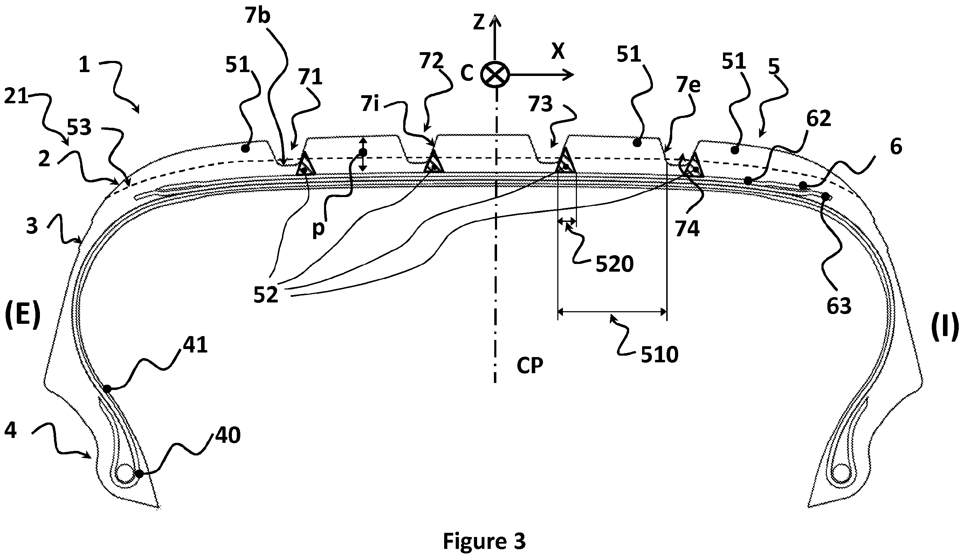

L'élément de renforcement circonférentiel 52 s'oppose au basculement et au cisaillement de la nervure formée par le bloc 51 pourvu d'un tel élément de renforcement circonférentiel 52. De préférence, l'ensemble des blocs 51 est pourvu élément de renforcement circonférentiel 52 comme montré aux figures 3 à 7.

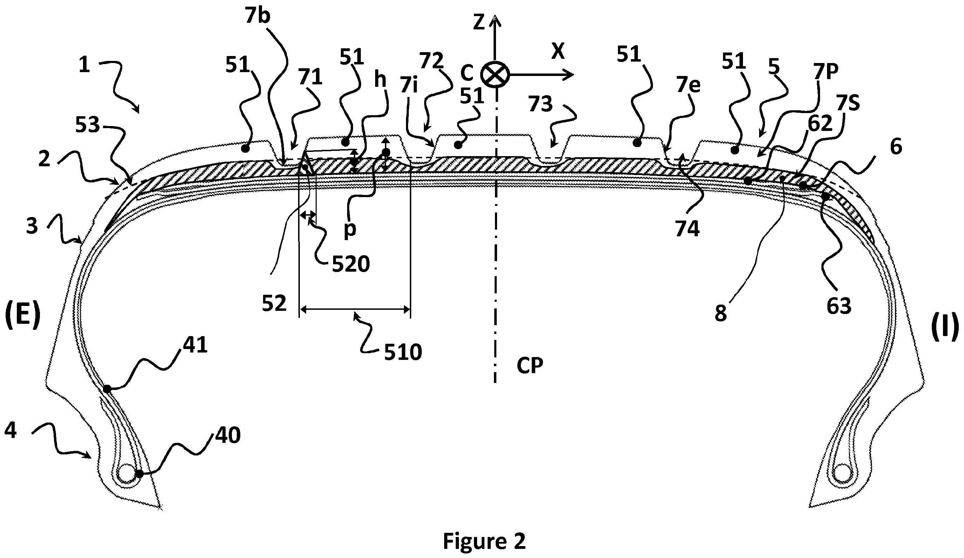

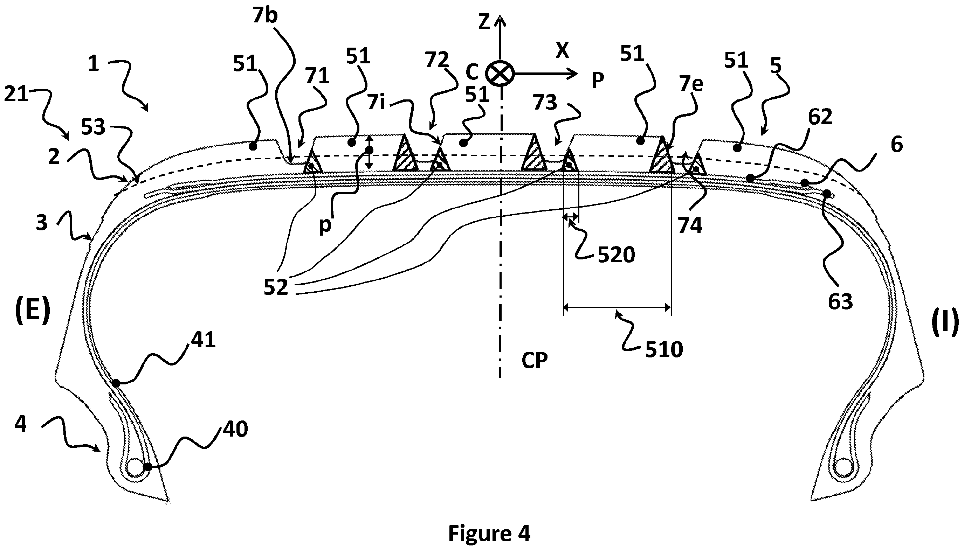

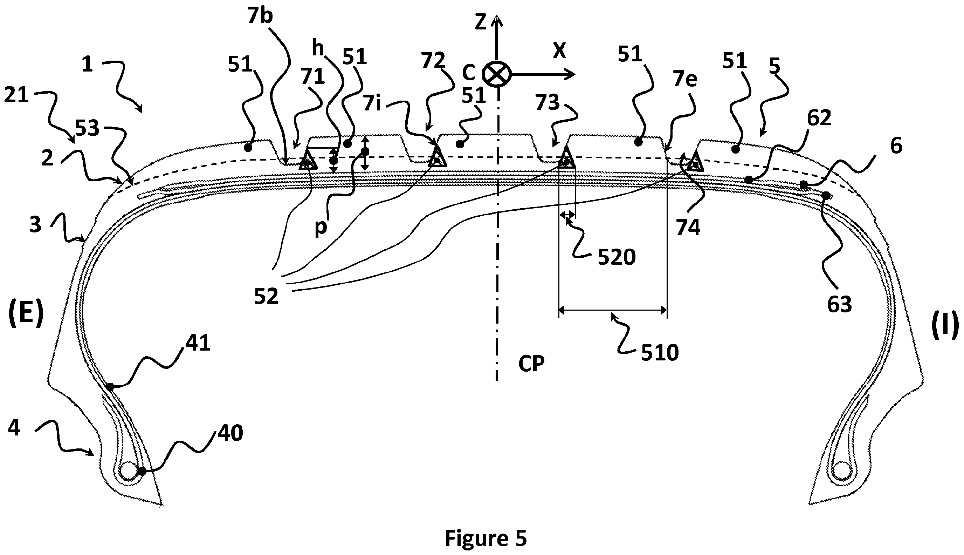

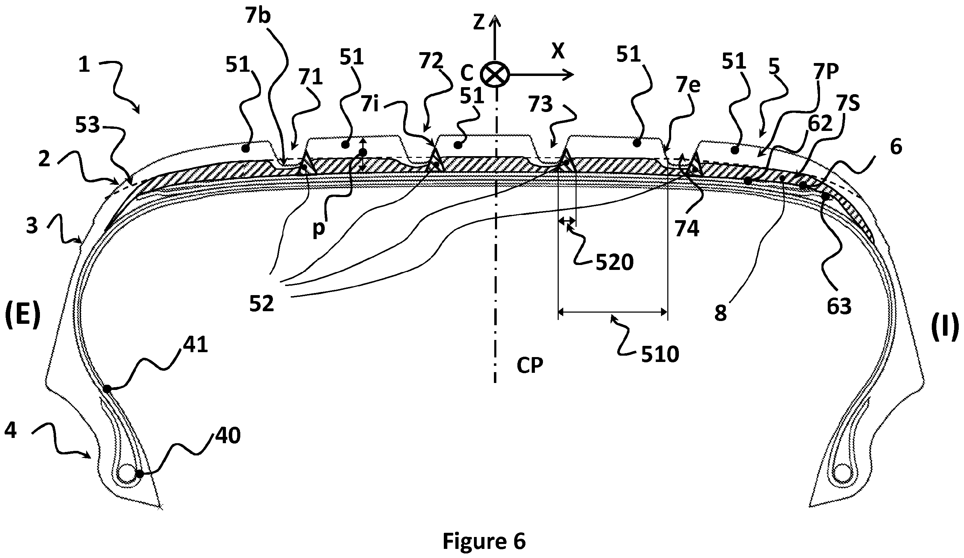

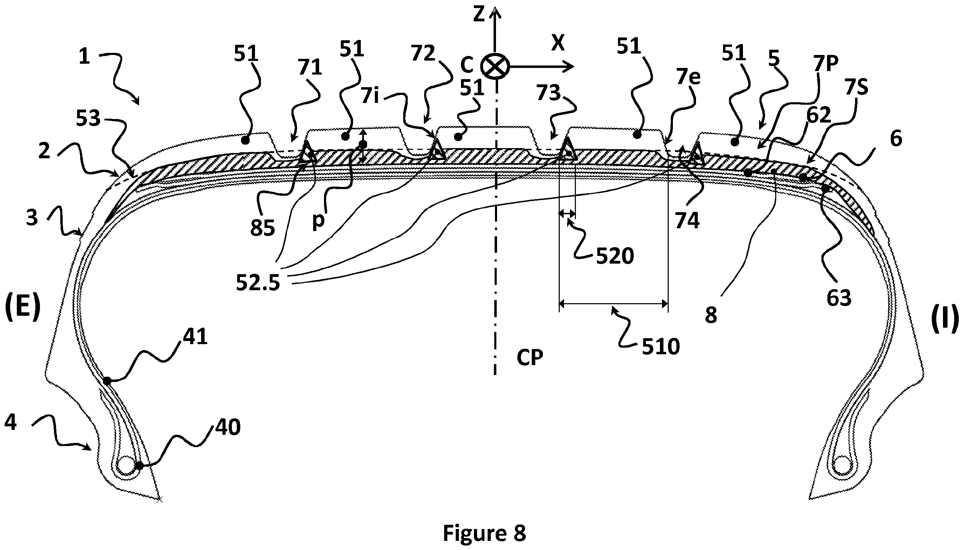

Les figures 2, 6, 7 et 8 illustrent des exemples de mise en œuvre de l'invention dans lesquels la bande de roulement 2 comporte une sous-couche 8. Cette sous-couche 8 est interposée entre l'armature de sommet 6 et lesdits blocs 51, sans être interposée entre l'armature de sommet 6 et les élément de renforcement circonférentiel 52 dans les exemples illutrés par les figures 4 et 5 et, pour une partie de la largeur axiale de la sous-couche, aussi à la figure 6, alors que la sous-couche 85 est interposée entre l'armature de sommet 6 et lesdits blocs 51 et aussi entre l'armature de sommet 6 et chaque élément de renforcement circonférentiel 52.5 desdits blocs 51 dans l'exemple illutré à la figure 8. Dans le cas d'une sous-couche de basse hystérèse, bien évidemment on utilise moins de matériau de renforcement, celui-ci étant plus hystérétique. Dans le cas d'une sous-couche rigide, tant que l'épaisseur sous-couche n'est pas trop importante, le renforcement est tout aussi efficace.

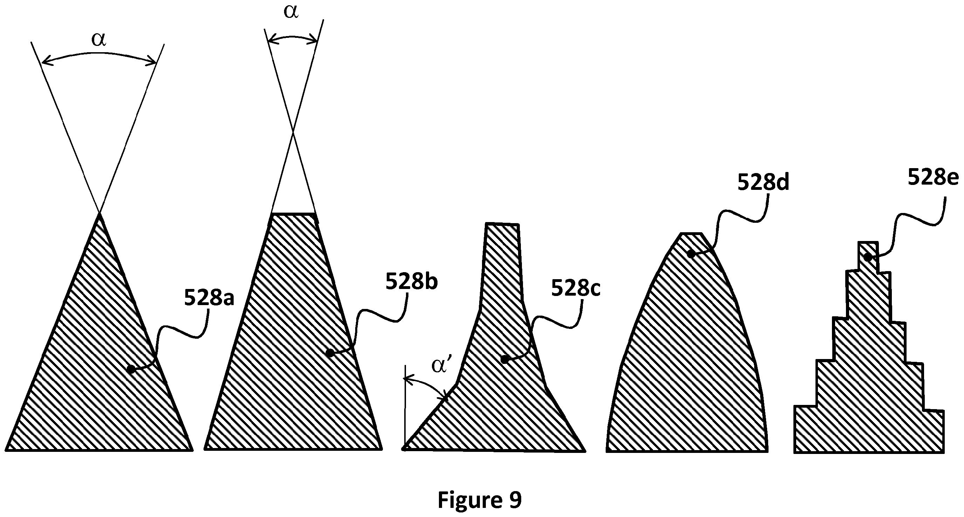

La forme des éléments de renforcement circonférentiel présentés est triangulaire, mais cette forme peut varier et les parois latérales peuvent être concaves, convexes ou en escaliers notamment sans sortir du cadre de cet invention. Le lecteur se reportera à la figure 9 dans laquelle, pour référence, un élément de renforcement circonférentiel 528a vu en coupe méridienne présente une forme en triangle telle qu'employé dans toutes les illustrations précédentes, les parois latérales vues en coupe méridienne étant donc des droites. Dans la variante formée par l'élément de renforcement circonférentiel 528b, la coupe méridienne de celui-ci est un trapèze, les parois latérales vues en coupe méridienne étant aussi des droites ; la limite radialement extérieure de cet élément de renforcement circonférentiel 528b est aussi une droite et, par exemple, celle-ci affleure à la surface de la bande de roulement. Dans la variante formée par l'élément de renforcement circonférentiel 528c, les parois latérales vues en coupe méridienne sont des segments de droite, l'angle angle a' que forme chacun de ces segments avec la direction radiale variant d'un segement au suivant (diminuant en allant radialement vers l'extérieur sur la figure). Dans la variante formée par l'élément de renforcement circonférentiel 528d, les parois latérales vues en coupe méridienne sont courbes, convexes ; elles pourraient être concaves. Dans la variante formée par l'élément de renforcement circonférentiel 528e, les parois latérales vues en coupe méridienne forment des escaliers. Ces variations de forme de la coupe méridienne peuvent être utilisée avec toutes les variantes précédemment décrites. Les formes du renforcement sont de manière non limitatives de préférence symétriques pour limiter les poussées parasites lors de la mise à plat mais les formes du renforcement peuvent également être asymétriques de manière à lutter contre les dits efforts parasites.

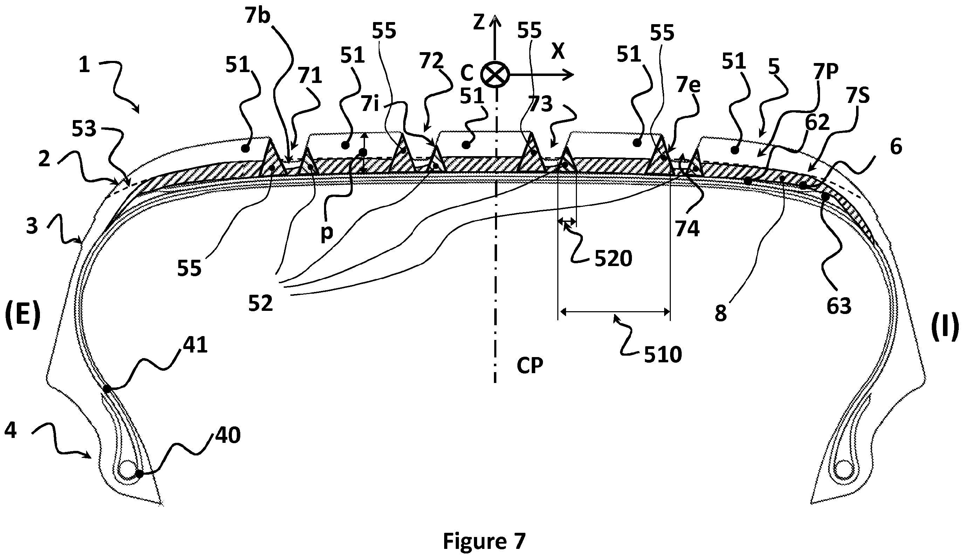

Les éléments de sculpture peuvent comporter un ou plusieurs éléments de renforcement, par exemple en fonction de la largeur axiale de l'élément de sculpture notamment sur des pneus de grande dimension. Dans les figures 4,7 on voit que les types d'éléments de renforcement 52 peuvent être associés avec des éléments de renforcements 55 disposés sur les bords de fuite des élément de sculpture 51. Ces éléments 55 sont décrit dans le brevet FR3035616-A1.

Selon l'objectif du concepteur du pneumatique, le mélange de cette sous-couche peut être à faible hystérèse et ainsi améliorer la résistance au roulement du pneumatique ou être plus rigide que l'autre mélange constituant de la bande de roulement, dans ce cas la sous-couche a une action de rigidification du sommet du pneumatique. Toutes les particularités du renforcement citées auparavant sont compatibles avec l'utilisation de cette sous-couche. Cette sous-couche se situant au-dessus de la base des éléments de renforcement lorsque la base existe de manière à ce que le renforcement s'appuie directement et en priorité sur l'armature sommet. C'est-à-dire sur le calandrage de la nappe de l'architecture sommet disposée radialement la plus extérieure.

Les éléments de renforcement circonférentiel doivent servir de point d'appui pour s'opposer au cisaillement et au basculement des blocs de sculpture qui les contiennent. Pour cela le mélange constituant ces éléments de renforcement circonférentiel est de préférence très notablement plus rigide que celui de la bande de roulement. À titre préférentiel, le module dynamique de cisaillement G* mesuré à 60°C, à 10 Hz et sous une contrainte de cisaillement alterné de 0,7 MPa est supérieur à 5 MPa ; il est avantageux que ce module dynamique de cisaillement G* soit très supérieur, par exemple supérieur à 10 MPa, ou à 20 MPa, et très préférentiellement supérieur à 30 MPa.

De telles mélanges sont décrits notamment dans la demande WO 2011/045342 A1 des Demanderesses.

Le tableau 1 ci-dessous donne un exemple d'une telle formulation.

**Tableau 1**

| Constituant | C.1 (en pce) |
|---|---|
| NR(1) | 100 |
| Noir de carbone (2) | 70 |
| Résine Formophénolique (3) | 12 |
| ZnO (4) | 3 |
| Acide stéarique (5) | 2 |
| 6PPD (6) | 2,5 |
| HMT (7) | 4 |
| Soufre | 3 |
| CBS (8) | 2 |

| | |
|---|---|
| (1) Caoutchouc Naturel ; (2) Noir de carbone N326 (dénomination selon la norme ASTM D-1765) ; (3) Résine formophénolique novolac (« Peracit 4536K » de la société Perstorp) ; (4) Oxyde de zinc (grade industriel - société Umicore) ; (5) Stéarine (« Pristerene 4931 » de la société Uniqema) ; (6) N-1,3-diméthylbutyl-N-phénylparaphénylènediamine (Santoflex 6-PPD de la société Flexsys) ; (7) Hexaméthylènetétramine (de la société Degussa) ; (8) N-cyclohexyl-benzothiazyl sulphénamide(Santocure CBS de la société Flexsys). | |

Cette formulation permet d'obtenir des mélanges de rigidité élevée. Le module dynamique de cisaillement G* mesuré sous une contrainte de cisaillement alternée de 0,7 MPa à 10 Hz et 60 degrés Celsius est de 30,3 MPa.

Ce matériau très rigide pour les renforcements circonférentiels est de préférence utilisé dans des bandes de roulement de faible rigidité avec des modules dynamiques de cisaillement G* inférieurs à 1,3 MPa et de préférence inférieurs ou égaux à 1,1 MPa, et encore plus préférenciellement, inférieurs ou égaux à 0,9 MPa.

Le tableau 2 suivant donne un exemple de formulation adaptée :

**Tableau 2**

| Composition | B1 (pce) |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

Les formulations sont données en masse.
(a) SBR avec 27% styrène, butadiène -1,2 :5%, cis-1,4 :15%, trans -1,4: 80% Tg -48°C
(b) Silice « Zeosil1165MP » de la société Solvay de surface BET 160m²/g
(c) Silane TESPT « SI69 » de la société Evonik
(d) Huile TDAE « Flexon 630 » de la société Shell
(e) Résine « Escorez 2173 » de la société Exxon
(f) Antioxydant « Santoflex 6PPD » de la société Solutia
(g) Accélérateur « Santocure CBS » de la société Solutia pce: partie en poids pour 100 parties d'élastomère.

Le module dynamique de cisaillement G* après vulcanisation est de 0,9 MPa.

L'homme du métier, concepteur de pneumatiques pourra adapter le nombre et la position des éléments de renforcement circonférentiel pour obtenir une résistance optimale aux basculement et cisaillement des nervures et blocs de sculpture et cela pour des pneumatiques asymétriques ou non.

### Caractérisation des matériaux

Les mélanges caoutchouteux sont caractérisés comme indiqué ci-après.

Les propriétés mécaniques dynamiques sont bien connues des hommes du métier. Ces propriétés sont mesurées sur un viscoanalyseur (Metravib VA4000) avec des éprouvettes prélevées sur un pneumatique. Les éprouvettes utilisées sont décrites dans la norme ASTM D 5992-96 (on utilise la version publiée en septembre 2006 mais initialement approuvée en 1996) à la figure X2.1 (éprouvettes circulaires). Le diamètre « d » des éprouvettes est de 10 mm (la section circulaire est ainsi de 78.5 mm²), l'épaisseur « L » de chaque portion de mélange est de 2 mm, donnant un rapport « d/L » de 5 (par opposition au standard ISO 2856, mentionné au paragraphe X2.4 du standard ASTM, qui recommande une valeur d/L de 2).

On enregistre la réponse d'un échantillon de composition vulcanisée soumis à une sollicitation sinusoïdale en cisaillement simple alterné, à la fréquence de 10 Hz. La contrainte de cisaillement maximale imposée est de 0,7 MPa.

Les mesures sont faites avec une variation de température de 1,5°C par minute, d'une température minimale inférieure à la température de transition vitreuse (Tg) du mélange ou caoutchouc jusqu'à une température maximale supérieure à 100°C. Avant le commencement de la caractérisation, l'éprouvette est conditionnée à la température minimale pendant 20 minutes pour garantir une bonne homogénéité de température dans l'éprouvette.

Le résultat utilisé est notamment la valeur du module dynamique de cisaillement G* à la température de 60°C.

## Revendications

1. Pneumatique (1) ayant un côté extérieur (E) et un côté intérieur (I), le pneumatique comprenant une armature de sommet (6) et une bande de roulement (5) radialement extérieure, la bande de roulement comprenant une pluralité de blocs (51) de sculpture, deux blocs de sculpture étant séparés par au moins une rainure circonférentielle (71, 72, 73, 74) s'étendant au moins en partie circonférentiellement, et une face de contact destinée à venir en contact avec la chaussée pendant le roulage du pneumatique, chaque rainure circonférentielle (71, 72, 73, 74) chacune délimitée par une face latérale axialement interne (7i), par une face latérale axialement externe (7e) et par un fond (7b) de rainure circonférentielle, la bande de roulement ayant une face de contact destinée à venir en contact avec la chaussée pendant le roulage du pneumatique et un niveau limite d'usure situé radialement à l'extérieur dudit fond de rainure circonférentielle, au moins un desdits blocs de sculpture (51) comportant un élément de renforcement circonférentiel (52) disposé axialement intérieurement relativement à au moins une desdites rainures circonférentielles (71, 72, 73, 74) en allant de l'extérieur vers l'intérieur et axialement à proximité de ladite rainure circonférentielle,
l'élément de renforcement circonférentiel (52) étant constitué d'un mélange caoutchouteux de module dynamique de cisaillement G* - mesuré selon la norme ASTM D 5992-96 à 60°C à 10 Hz et sous une contrainte de cisaillement alterné de 0,7 MPa avec un diamètre des éprouvettes de 10 mm et un épaisseur de chaque portion de mélange de 2 mm - au moins deux fois supérieur au module dynamique de cisaillement G* - mesuré selon la norme ASTM D 5992-96 à 60°C à 10 Hz et sous une contrainte de cisaillement alterné de 0,7 MPa avec un diamètre des éprouvettes de 10 mm et un épaisseur de chaque portion de mélange de 2 mm - du mélange caoutchouteux du reste des blocs de la bande de roulement, ledit élément de renforcement circonférentiel (52) formant en partie la face latérale axialement interne (7i) dudit au moins un desdits blocs de sculpture (51),
**caractérisé en ce que** l'élément de renforcement circonférentiel (52) s'étend radialement de la surface radialement extérieure de ladite armature de sommet (6) vers la surface de ladite bande de roulement avec une largeur axiale qui diminue progressivement en se déplaçant radialement vers l'extérieur, ladite largeur axiale ayant une valeur maximale (520) inférieure à 40% de la largeur axiale (510) dudit bloc, ledit élément de renforcement circonférentiel (52) s'étend radialement au maximum sur une hauteur « h » correspondant à 75% de l'épaisseur « p » de la bande de roulement.

2. Pneumatique (1) selon la revendication 1, dans lequel chacun desdits blocs de sculpture (51) comporte un élément de renforcement circonférentiel (52).

3. Pneumatique selon l'une quelconque des revendications précédentes, dans lequel ladite largeur axiale a une valeur maximale (520) inférieure à 30% de la largeur axiale (510) dudit bloc.

4. Pneumatique selon l'une quelconque des revendications précédentes, comportant une sous-couche (8), interposée entre l'armature de sommet (6) et lesdits blocs (51).

5. Pneumatique selon l'une quelconque des revendications précédentes, comportant une sous-couche (85), interposée entre l'armature de sommet (6) et lesdits blocs (51) et entre l'armature de sommet (6) et chaque élément de renforcement circonférentiel (52.5) desdits blocs (51).

6. Pneumatique selon l'une quelconque des revendications précédentes, dans lequel l'angle des deux parois latérales du ou des éléments de renforcement est compris entre 35 et 45 degrés.

7. Pneumatique selon l'une quelconque des revendications précédentes, dans lequel les éléments de renforcements ont une forme de préférence axialement symétriques.

8. Pneumatique selon l'une quelconque des revendications précédentes, dans lequel le mélange caoutchouteux constitutif du renforcement circonférentiel a un module dynamique de cisaillement G* - mesuré selon la norme ASTM D 5992-96 à 60°C à 10 Hz et sous une contrainte de cisaillement alterné de 0,7 MPa avec un diamètre des éprouvettes de 10 mm et un épaisseur de chaque portion de mélange de 2 mm - supérieur à 5 MPa et préférentiellement supérieur à 10 MPa.

9. Pneumatique selon l'une quelconque des revendications précédentes, dans lequel le mélange caoutchouteux de bande de roulement a un module dynamique de cisaillement G* - mesuré selon la norme ASTM D 5992-96 à 60°C à 10 Hz et sous une contrainte de cisaillement alterné de 0,7 MPa avec un diamètre des éprouvettes de 10 mm et un épaisseur de chaque portion de mélange de 2 mm - inférieur ou égal à 1,3 MPa et préférentiellement inférieur à 1,1 MPa.

## Patentansprüche

1. Reifen (1) mit einer Außenseite (E) und einer Innenseite (I), wobei der Reifen eine Scheitelbewehrung (6) und einen radial äußeren Laufstreifen (5) umfasst, wobei der Laufstreifen mehrere Profilblöcke (51), wobei zwei Profilblöcke durch wenigstens eine Umfangsrille (71, 72, 73, 74) getrennt sind, die sich wenigstens teilweise in Umfangsrichtung erstreckt, und eine Kontaktfläche, die dazu bestimmt ist, während des Rollens des Reifens mit der Fahrbahn in Kontakt zu kommen, umfasst, wobei jede Umfangsrille (71, 72, 73, 74) jeweils von einer axial inneren Seitenfläche (7i), von einer axial äußeren Seitenfläche (7e) und von einem Umfangsrillenboden (7b) begrenzt wird, wobei der Laufstreifen eine Kontaktfläche, die dazu bestimmt ist, während des Rollens des Reifens mit der Fahrbahn in Kontakt zu kommen, und eine Abnutzungsgrenze, die sich radial außerhalb des Umfangsrillenbodens befindet, aufweist,
wobei wenigstens einer der Profilblöcke (51) ein Umfangsverstärkungselement (52) aufweist, das axial innen in Bezug auf wenigstens eine der Umfangsrillen (71, 72, 73, 74) angeordnet ist und dabei von außen nach innen und axial in der Nähe dieser Umfangsrille verläuft,
wobei das Umfangsverstärkungselement (52) aus einer Kautschukmischung mit einem dynamischen Schubmodul G* - gemessen gemäß der Norm ASTM D 5992-96 bei 60 °C bei 10 Hz und unter einer wechselnden Schubbeanspruchung von 0,7 MPa bei einem Durchmesser der Prüfkörper von 10 mm und einer Dicke jedes Mischungsabschnitts von 2 mm - besteht, der mindestens zweimal so groß wie der dynamische Schubmodul G* - gemessen gemäß der Norm ASTM D 5992-96 bei 60 °C bei 10 Hz und unter einer wechselnden Schubbeanspruchung von 0,7 MPa bei einem Durchmesser der Prüfkörper von 10 mm und einer Dicke jedes Mischungsabschnitts von 2 mm - der Kautschukmischung des Restes der Blöcke des Laufstreifens ist,
wobei das Umfangsverstärkungselement (52) einen Teil der axial inneren Seitenfläche (7i) des wenigstens einen der Profilblöcke (51) bildet, **dadurch gekennzeichnet, dass** sich das Umfangsverstärkungselement (52) radial von der radial äußeren Fläche der Scheitelbewehrung (6) zur Oberfläche des Laufstreifens hin mit einer axialen Breite erstreckt, welche sich radial nach außen hin allmählich verringert, wobei die axiale Breite einen maximalen Wert (520) hat, der kleiner als 40 % der axialen Breite (510) des Blockes ist, und das Umfangsverstärkungselement (52) sich radial maximal auf einer Höhe "h" erstreckt, welche 75 % der Dicke "p" des Laufstreifens entspricht.

2. Reifen (1) nach Anspruch 1, wobei jeder der Profilblöcke (51) ein Umfangsverstärkungselement (52) aufweist.

3. Reifen nach einem der vorhergehenden Ansprüche, wobei die axiale Breite einen maximalen Wert (520) hat, der kleiner als 30 % der axialen Breite (510) des Blockes ist.

4. Reifen nach einem der vorhergehenden Ansprüche, welcher eine Unterschicht (8) aufweist, die zwischen der Scheitelbewehrung (6) und den Blöcken (51) angeordnet ist.

5. Reifen nach einem der vorhergehenden Ansprüche, welcher eine Unterschicht (85) aufweist, die zwischen der Scheitelbewehrung (6) und den Blöcken (51) und zwischen der Scheitelbewehrung (6) und jedem Umfangsverstärkungselement (52.5) der Blöcke (51) angeordnet ist.

6. Reifen nach einem der vorhergehenden Ansprüche, wobei der Winkel der zwei Seitenwände des oder der Verstärkungselemente zwischen 35 und 45 Grad liegt.

7. Reifen nach einem der vorhergehenden Ansprüche, wobei die Verstärkungselemente eine vorzugsweise axialsymmetrische Form aufweisen.

8. Reifen nach einem der vorhergehenden Ansprüche, wobei die Kautschukmischung, aus der die Umfangsverstärkung besteht, einen dynamischen Schubmodul G* aufweist, gemessen gemäß der Norm ASTM D 5992-96 bei 60 °C bei 10 Hz und unter einer wechselnden Schubbeanspruchung von 0,7 MPa bei einem Durchmesser der Prüfkörper von 10 mm und einer Dicke jedes Mischungsabschnitts von 2 mm, die größer als 5 MPa und vorzugsweise größer als 10 MPa ist.

9. Reifen nach einem der vorhergehenden Ansprüche, wobei die Kautschukmischung des Laufstreifens einen dynamischen Schubmodul G* aufweist, gemessen gemäß der Norm ASTM D 5992-96 bei 60 °C bei 10 Hz und unter einer wechselnden Schubbeanspruchung von 0,7 MPa bei einem Durchmesser der Prüfkörper von 10 mm und einer Dicke jedes Mischungsabschnitts von 2 mm, der kleiner oder gleich 1,3 MPa und vorzugsweise kleiner als 1,1 MPa ist.

## Claims

1. Tyre (1) having an exterior side (E) and an interior side (I), the tyre comprising a crown reinforcement (6) and a tread (5) radially on the outside, the tread comprising a plurality of tread pattern blocks (51), two tread pattern blocks being separated by at least one circumferential groove (71, 72, 73, 74) extending at least partially circumferentially, and a contact face intended to come into contact with the roadway when the tyre is being driven on, each circumferential groove (71, 72, 73, 74) each being delimited by an axially internal lateral face (7i), by an axially external lateral face (7e) and by a circumferential-groove bottom (7b), the tread having a contact face intended to come into contact with the roadway when the tyre is being driven on and a wear limit level situated radially on the outside of the said circumferential-groove bottom,
at least one of the said tread pattern blocks (51) comprising a circumferential reinforcing element (52) positioned axially on the inside relative to at least one of the said circumferential grooves (71, 72, 73, 74) when working from the outside towards the inside and axially close to the said circumferential groove,
the circumferential reinforcing element (52) being made of a rubber compound having a dynamic shear modulus G* - measured in accordance with ASTM D 5992-96 at 60°C, at 10 Hz and under an alternating shear stress of 0.7 MPa on test specimens of diameter 10 mm with the thickness of each portion of compound being 2 mm - at least twice as high as the dynamic shear modulus G* - measured in accordance with ASTM D 5992-96 at 60°C, at 10 Hz and under an alternating shear stress of 0.7 MPa on test specimens of diameter 10 mm with the thickness of each portion of compound being 2 mm - of the rubber compound of the rest of the blocks of the tread,
the said circumferential reinforcing element (52) partially forming the axially internal lateral face (7i) of the said at least one of the said tread pattern blocks (51). **characterized in that** the circumferential reinforcing element (52) extends radially from the radially exterior surface of the said crown reinforcement (6) towards the surface of the said tread with an axial width which decreases progressively with increasing radial proximity to the outside, the said axial width having a maximum value (520) less than 40% of the axial width (510) of the said block, the said circumferential reinforcing element (52) extending radially at most over a height "h" corresponding to 75% of the thickness "p" of the tread,

2. Tyre (1) according to Claim 1, in which each of the said tread pattern blocks (51) comprises a circumferential reinforcing element (52).

3. Tyre according to either one of the preceding claims, in which the said axial width has a maximum value (520) less than 30% of the axial width (510) of the said block.

4. Tyre according to any one of the preceding claims, comprising an underlayer (8), interposed between the crown reinforcement (6) and the said blocks (51).

5. Tyre according to any one of the preceding claims, comprising an underlayer (85), interposed between the crown reinforcement (6) and the said blocks (51) and between the crown reinforcement (6) and each circumferential reinforcing element (52.5) of the said blocks (51).

6. Tyre according to any one of the preceding claims, in which the angle of the two lateral walls of the reinforcing element(s) is between 35 and 45 degrees.

7. Tyre according to any one of the preceding claims, in which the reinforcing elements have a shape that is preferably axially symmetrical.

8. Tyre according to any one of the preceding claims, in which the rubber compound of which the circumferential reinforcement is made has a dynamic shear modulus G* - measured in accordance with ASTM D 5992-96 at 60°C at 10 Hz and under an alternating shear stress of 0.7 MPa on test specimens of diameter 10 mm with the thickness of each portion of compound being 2 mm - greater than 5 MPa and preferably greater than 10 MPa.

9. Tyre according to any one of the preceding claims, in which the rubber compound of the tread has a dynamic shear modulus G- measured in accordance with ASTM D 5992-96 at 60°C at 10 Hz and under an alternating shear stress of 0.7 MPa on test specimens of diameter 10 mm with the thickness of each portion of compound being 2 mm - less than or equal to 1.3 MPa and preferably less than 1.1 MPa.
